# EUROPEAN PATENT SPECIFICATION

(11) **EP 3 831 457 B1**
(45) Date of publication and mention of the grant of the patent: **01.10.2025**
(21) Application number: 20159127.8
(22) Date of filing: 24.02.2020
(51) Int. Cl.: B01D 19/00

(54) **SYSTEM AND PROCESS FOR DEGASSING A LIQUID**
SYSTEM UND VERFAHREN ZUR ENTGASUNG EINER FLÜSSIGKEIT
SYSTÈME ET PROCÉDÉ DE DÉGAZAGE D'UN LIQUIDE

(30) Priority: 03.12.2019 IN 201941049676
(43) Date of publication of application: 09.06.2021
(73) Proprietor: Hitachi Energy Ltd, 8050 Zürich (CH)
(72) Inventor: STRÖMBERG, Andreas, 24791 S Sandby (SE)
(74) Representative: Valea AB

(56) References cited:
- EP-A1- 0 646 400
- EP-A1- 2 770 041
- US-A- 3 815 330
- US-A- 5 310 417
- US-A1- 2004 168 900
- US-A1- 2014 291 258

## Description

### Field of the Invention

The present invention relates generally to the removal of gases from a liquid. The invention more particularly relates to a system and process for removing gases from a liquid and a liquid treatment arrangement.

### Background of the Invention

Removal of gases from a liquid is a common procedure in a variety of industries, such as e.g. in the manufacturing industry where the manufactured goods may react with the gases in the liquid used to clean or cool the goods, or in the petrochemical and power generation industries where the gases may cause corrosion of the metal piping in the steam system. Gases in liquid may also cause problems in heat exchanging systems, as the gases may impair the heat transfer capacity of the liquid or stop the liquid pumps.

Gases may be removed from a liquid by e.g. using an expansion vessel or a deaerator. A deaerator is a mechanical piece of equipment that enables free gas to rise to the liquid surface by reducing the velocity in the liquid flow, and which comprises a manual or automatic breathing valve configured to release gas and not liquid. For gases that are in solution with the liquid, a stripping mechanism may be used which e.g. may be based on heated steam. There are also other types of techniques to remove gases from the liquid, such as vacuum-based or ultrasound-based deaerators. If an expansion vessel is used for the gas removal it can, except for providing the gas removal functionality, accommodate changes in liquid volume caused by temperature variations. Alternatively, or in additionally, chemicals used as gas scavengers can be used to facilitate the removal of gases from the liquid.

In EP0417342A1, a method for de-oxygenating water by bubbling nitrogen gas through the water is presented. When the nitrogen gas is bubbled through the water (containing dissolved gases) the bubbled gas gradually removes and replaces the dissolved gas. Such technique is beneficial as it may be carried out at ambient temperature and at elevated pressure.

In spite of the above-mentioned techniques, it is difficult to remove a satisfactory portion of the gases from the liquid in a cost-effective manner and safe manner. Thus, there is a need in the industry for an improved process to remove gases from a liquid in an economical and sustainable manner. US3815330A discloses an apparatus-for removing oxygen from a pressure-fed, continuously-flowing liquid food product by the method of stripping the oxygen from the liquid by nitrogen-comprising, in a first stage, a close-to-atmosphere receptacle through which the liquid flows, the receptacle providing a headspace above a normal surface level of the liquid in the receptacle, means to disperse nitrogen into the liquid for upward transition therein, certain of the resultant oxygen-nitrogen gas mixture gassing off from or escaping the liquid and accumulating in the headspace, and instrumentalities associated with the receptacle operative to vent the accumulated gas mixture in the headspace to atmosphere in response to the liquid in the receptacle falling below said normal surface level and to introduce nitrogen under pressure into the headspace in response to the liquid in the receptacle rising above such normal surface level, whereby in either event to cause return of said surface level to normal.

### Summary

An object of the present invention is to overcome the above problems, and to provide a process which, at least to some extent, is improved compared to prior art solutions. This, and other objects, which will become apparent in the following are accomplished by means of a process for removing gases from a liquid, and a liquid treatment arrangement.

According to at least a first aspect of the present invention, a process for removing gases from a liquid is provided, said process being defined in claim 1.

Hereby, gases can be effectively removed from the liquid in a two vessel-step process, and the first vessel can be kept at a reasonable size. Thus, a space-effective and cost-effective process is provided. Stated differently, by the present invention, a portion, such as e.g. a majority, of the dissolved gases in the supply liquid is removed in the first vessel by using a stripping gas, typically by forming relatively large bubbles as the stripping gas removes and replaces the dissolved gas in the liquid, wherein a portion of the stripping gas is kept in the liquid out from the first vessel (i.e. in the reduced gas containing liquid), whereby a portion, such as e.g. a majority, of the stripping gas is removed in the second vessel. That is, the usage of the stripping gas to remove dissolved gases from the supply liquid in the first vessel, results in that at least a portion of said stripping gas is kept in the liquid leaving the first vessel. This stripping gas, e.g. as undissolved stripping gas in the form of relatively small bubbles, is then removed from the liquid in the second vessel. Hereby, gases, i.e. both dissolved and undissolved gases, is removed from the liquid. It should be noted that a portion of dissolved gases may also be transferred with the liquid leaving the first vessel, and may thus subsequently be removed in the second vessel.

In more detail, the inventor has realized that as a result of introducing the stripping gas into the supply liquid in the first vessel, a recirculation zone with liquid comprising a least a portion of the stripping gas will be formed in the first vessel, typically below the injection of the stripping gas. As the liquid outlet from the first vessel typically is located near a bottom of the vessel, below the injection of the stripping gas, the liquid leaving the first vessel through the outlet will contain liquid from the recirculation zone, and thus contain at least a portion of the stripping gas, typically undissolved stripping gas.

It should be understood that the reduced gas containing liquid contains a reduced amount of dissolved gases, or undesired dissolved gases, compared to the supply liquid, and may thus be referred to as a reduced dissolved gas containing liquid.

The first vessel and/or the second vessel may be an expansion vessel. Additionality or alternatively, the first vessel and/or the second vessel is a deaerator.

The process further comprises the step of bubbling the stripping gas through the supply liquid in the first vessel. This is beneficial, as it improves the contact area between the stripping gas and the liquid. Thus, the first vessel may be referred to as a bubbling vessel, or a vessel being equipped with stripping gas bubbling functionality. In such cases, at least two parameters are used to control the amount of gases removed from the liquid, the bubbling time and the gas flow. The bubbling time may be controlled by a controller comprising a processor configured to run a software with instructions (part of instrumentation for operating the system) including e.g. control signals to regulate a valve, such as e.g. a solenoid valve, controlling the feed if stripping gas to the first vessel, and control signals to a pressure regulating valve regulating the amount of stripping gas fed to the system. The amount of stripping gas may be measured by a gas flow meter, possibly together with data (e.g. opening time) from a valve, such as a solenoid valve, controlling the amount of stripping gas fed to the first vessel.

According to at least one example embodiment, the reduced gas containing liquid is held in the second vessel for a pre-defined time, the pre-defined time being based on the size of the second vessel, and the liquid flow, to enable at least a portion, such as e.g. a majority, of the (undissolved) stripping gas to be removed from the liquid. Typically, the liquid is flowing through the system, and the second vessel, but the residence time of the liquid in the second vessel is adapted to enable the removal of said portion of the (undissolved) stripping gas from the liquid.

According to at least one example embodiment, the second vessel is not a bubbling vessel. That is, the second vessel lacks an inlet for injection of a stripping gas.

The step of injecting a stripping gas into the liquid volume results in the formation of a stripping gas cushion above the first vessel level of the liquid volume, and the step of introducing a supply liquid to the first vessel comprises injecting, by sprinkling or spraying, the supply liquid into the stripping gas cushion.

Hereby, the overall contact surface between the liquid and the stripping gas is increased. Thus, the first vessel is configured and arranged to enable the formation of a stripping gas cushion above the first vessel level of the liquid in the vessel. In other words, the process comprises the step of forming a stripping gas cushion above the first vessel level of the liquid volume in the first vessel.

According to at least one example embodiment, each one of the first and second vessel is arranged and configured to, in operation, have at least two separate phases present in their respective interior vessel space. That is, in each of the first and second vessel, the liquid volume forms a first phase which is present below a gas volume forming a second phase, wherein the two phases are separated by a liquid-gas interface at the first and second vessel level, respectively. However, as mentioned above, in the liquid volume present in the first and second vessels, undissolved gases may be present as bubbles, e.g. formed by the stripping gas, and/or of the removed unwanted dissolved gas from the liquid.

The step of introducing the reduced gas containing liquid into the second vessel is performed to form a liquid volume at a second vessel level inside of the second vessel, wherein the reduced gas containing liquid is introduced through an inlet located in a lower half of the second vessel.

The inlet may e.g. be arranged and configured to be, in operation, relatively close to the second vessel level, to facilitate the release of the stripping gas from the liquid to the gas phase above the second vessel level.

According to at least one example embodiment, the process further comprises the step of discharging liquid from the second vessel at an outlet positioned in the lower half of the second vessel.

Thus, both the inlet (liquid inlet) and the outlet (liquid outlet) are arranged in the lower half of the second vessel. The liquid inlet and liquid outlet are preferably arranged to avoid a by-pass flow of the reduced gas containing liquid leaving the second vessel without given sufficient residence time to enable said portion of the stripping gas to be removed from the liquid. For example, the liquid outlet may be arranged relatively far from the second vessel level compared to the liquid inlet.

According to at least one example embodiment, the step of introducing the reduced gas containing liquid into the second vessel is performed through an inlet pipe extending from a periphery of the second vessel into the liquid volume.

Hereby, the inlet, or liquid inlet, to the second vessel is brought closer to the second vessel level to facilitate the release of gases, such as the stripping gas, from the liquid to the gas phase above the second vessel level. Moreover, by utilizing an inlet pipe, the risk of the above-mentioned by-pass flow of the reduced gas containing liquid is reduced.

According to at least one example embodiment, the step of introducing the reduced gas containing liquid into the second vessel is performed by directing the liquid away from a liquid outlet of the second vessel.

Hereby, the risk of the above-mentioned by-pass flow of the reduced gas containing liquid is further reduced.

According to at least one example embodiment, the process further comprises the step of venting gas from the first vessel into a first gas venting pipe, and the step of venting gas from the second vessel into a second gas venting pipe, the second gas venting pipe being in fluid communication with the first gas venting pipe so that the first vessel is gaseous connected to the second vessel. The first and second gas venting pipes are comprised in a first and second gas venting arrangement, wherein at least one of the first and second gas venting arrangement is configured to control the removal of gases from the first and second vessel, e.g. by utilizing suitable valves and pressure sensors.

Such connection enables the first vessel and the second vessel to share the same gas pressure. Hereby, the amount of liquid in the first and second vessels, as well as the liquid driving force from the first vessel to the second vessel can be controlled. Typically, for an embodiment in which the size of the first and second vessels are the same, the first vessel level of the liquid volume in the first vessel is higher compared to the second vessel level of the liquid volume in the second vessel, to drive the flow from the first vessel to the second vessel.

According to at least one example embodiment, the process comprises the steps of forming, by the injection of the stripping gas into the liquid volume in the first vessel, relatively large gas bubbles of at least the dissolved gas, and removing relatively smaller gas bubbles of at least the stripping gas in the second vessel.

Hereby, a wide-ranging process for removing gases from a liquid is provided.

According to at least one example embodiment, the process further comprises the steps of supplying the gas treated liquid to an object and cooling the object with the gas treated liquid.

The object may e.g. be a heat exchanger (whereby the heat exchanger has a separate cooling system and the gas treated liquid serve the purpose of a heat sink) or a power device, or the like.

According to at least one example embodiment, the stripping gas is an inert gas, such as e.g. nitrogen. Additionality or alternatively, at least a portion of the dissolved gas is oxygen. The dissolved gas in the liquid, and the stripping gas typically have similar solubilities in the liquid, to increase the efficiency of the gas removal.

According to at least one example embodiment, the process further comprises
- introducing the gas treated liquid into a third vessel
- accommodating the liquid from the gas treated liquid in the third vessel to enable at least an additional portion of the stripping gas to be removed from the liquid.

Hereby, an additional amount of gases can be removed from the liquid. The third vessel may e.g. be arranged correspondingly to the second vessel. Furthermore, dissolved gases transferred with the liquid into the third vessel may be additionally removed in the third vessel. The third vessel may e.g. be an expansion vessel or a deaerator. The third vessel may be followed by other, similar vessels to increase the gas removal, and possibly to fulfill the required expansion volume of the liquid system.

According to at least a second aspect of the present invention, a liquid treatment arrangement is provided, said liquid treatment arrangement being defined in claim 8.

Thus, effects, features and embodiments related to the second aspect of the present invention are largely analogous to those described above in connection with the first aspect of the invention, of which some are further elaborated below. Said at least portion of the stripping gas removed in the second chamber may e.g. be undissolved stripping gas.

According to at least one example embodiment, the liquid treatment arrangement further comprises a first supply line for providing the supply liquid, said first supply line being in direct fluid communication with the liquid inlet to the first vessel.

As mentioned in claim 1, the first vessel is configured and arranged such that, in operation, the injection of the stripping gas into the liquid volume results in the formation of a stripping gas cushion above the first vessel level of the liquid volume. According to at least one example embodiment, the liquid inlet of the first vessel is arranged in an upper half of the first vessel, such as e.g. at the top of the first vessel. As mentioned in claim 1, the liquid inlet is arranged and configured to supply liquid to the first vessel by injecting, by sprinkling or spraying, the supply liquid into the stripping gas cushion. Hereby, the overall contact surface between the liquid and the stripping gas is increased.

According to at least one example embodiment, the liquid outlet of the first vessel is arranged at the bottom of the vessel, typically below the liquid inlet.

According to at least one example embodiment, the first vessel is arranged relatively close the second vessel. For example, the first vessel is arranged adjacent the second vessel, such as e.g. within 5 m, or within 4 m, or within 3 m, or within 2 m, or within 1 m of the second vessel. Hereby, installation costs can be kept low, and the associated pressure drop of the liquid between the first and second vessels can be kept at a minimum.

According to at least one example embodiment, the second vessel comprises a liquid outlet for discharging the gas treated liquid from the second vessel, and wherein the liquid inlet is configured to inject the reduced gas containing liquid into the second vessel to, in operation, form a liquid volume at a second vessel level inside of the second vessel, wherein the liquid inlet is arranged in a lower half of the second vessel.

The liquid inlet may e.g. be arranged relatively close to the second vessel level, to facilitate the release of the stripping gas from the liquid to the gas phase above the second vessel level. As discussed in relation to the first aspect of the invention, the liquid inlet and liquid outlet are preferably arranged to avoid a by-pass flow of the reduced gas containing liquid leaving the second vessel without given sufficient residence time to enable said portion of the stripping gas to be removed from the liquid. For example, the liquid outlet may be arranged relatively far from the second vessel level compared to the liquid inlet.

According to at least one example embodiment, the second vessel further comprises an inlet pipe comprising the liquid inlet, wherein the inlet pipe extends from a periphery of the second vessel into the liquid volume.

As mentioned in relation to the first aspect of the invention, this enables the liquid inlet of the second vessel to be brought closer to the second vessel level to facilitate the release of gases, such as the stripping gas, from the liquid to the gas phase above the second vessel level. Moreover, by utilizing an inlet pipe, the risk of the above-mentioned by-pass flow of the reduced gas containing liquid is reduced.

According to at least one example embodiment, the inlet pipe is configured in such a way that the liquid inlet is facing away from the liquid outlet. Hereby, the risk of the above-mentioned by-pass flow of the reduced gas containing liquid is further reduced.

As defined in claim 1, the liquid treatment arrangement further comprises a first ventilation arrangement configured to ventilate gas from the first vessel, and a second ventilation arrangement configured to ventilate gas from the second vessel, wherein the second ventilation arrangement is in fluid communication with the first ventilation arrangement. Thereby, the first vessel is, in operation, gaseous connected to the second vessel.

The first ventilation arrangement may e.g. comprise the first gas venting pipe, and the second ventilation arrangement may e.g. comprise the second gas venting pipe, mentioned in relation to the first aspect of the invention. Effects and features of such configuration are not repeated for the second aspect of the invention.

According to at least one example embodiment, the liquid treatment arrangement comprises venting valves for regulating the gas pressure inside the first and second vessels. Moreover, the liquid treatment arrangement may comprise pressure sensors for measuring the pressure inside the first and second vessels. Furthermore, the liquid treatment arrangement may comprise a controller connected to the pressure sensors and configured to automatically regulate the venting valves. Hereby, an automated operation of the first and second vessel can be achieved. Such controller may also be connected to flow meters and valves regulating the liquid flow in the liquid treatment arrangement.

According to at least one example embodiment, the stripping gas is an inert gas, such as e.g. nitrogen. Additionality or alternatively, at least a portion of the dissolved gas in the liquid is oxygen. Thus, the liquid treatment arrangement may be configured and arranged to supply nitrogen as stripping gas to the first vessel. Moreover, the liquid treatment arrangement may be configured and arranged to remove oxygen from the liquid. The liquid may e.g. be water, or a water-based solution comprising additives, such as e.g. glycol.

### Brief Description of the Drawings

These and other aspects of the present inventive concept will now be described in more detail, with reference to the appended drawings showing an example embodiment of the inventive concept, wherein:
Fig. 1 is a flow chart in accordance with at least the first aspect of the present invention;
Fig. 2 schematically illustrates a liquid treatment arrangement in accordance with at least one embodiment of the invention;
Fig. 3 illustrates in cross section a first and second vessel in accordance with at least one embodiment of the invention;
Fig. 4 is a block diagram of a water treatment unit used in a cooling system;
Fig. 5 schematically illustrates a system for the removal of gases;
Fig. 6 schematically illustrates a system for the removal of gases in accordance with at least one example embodiment of the invention; and
Fig. 7 schematically illustrates a system for the removal of gases in accordance with at least one example embodiment of the invention.

### Detailed Description of Example Embodiments

In the present detailed description, various embodiments of the invention are mainly described with reference to a process for removing gases from a liquid, and liquid treatment arrangement comprising a first vessel and a second vessel.

In the following, the first and second vessels are exemplified as expansion vessels, i.e. a first expansion vessel and a second expansion vessel. However, it should be noted other types of vessels than expansion vessels are within the scope of the invention.

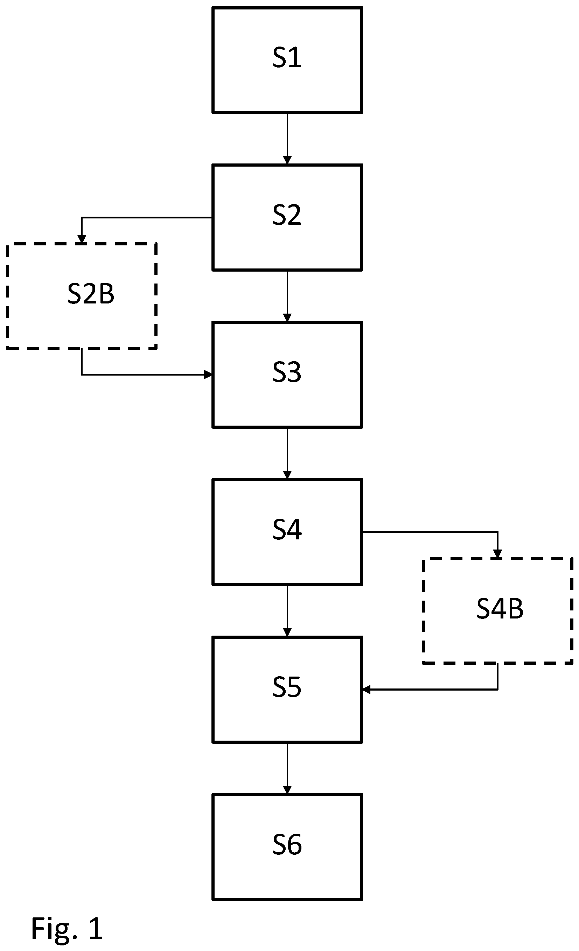

Fig. 1 discloses a process for removing gases from a liquid in accordance with at least one example embodiment of the invention. The process comprising the steps of:
S1 introducing a supply liquid to a first expansion vessel to form a liquid volume at a first vessel level inside of the first expansion vessel;
S2 injecting a stripping gas into the liquid volume below the first vessel level to remove at least a portion of the dissolved gas contained in the liquid volume to produce a reduced gas containing liquid including at least a portion of the stripping gas, hereby relatively large gas bubbles of at least the dissolved gas can be formed inside the liquid volume;
S3 introducing the reduced gas containing liquid into a second expansion vessel;
S4 accommodating the liquid from the reduced gas containing liquid in the second expansion vessel to enable at least a portion of the stripping gas to be removed from the liquid to produce a gas treated liquid. For example, the portion of the stripping gas may be formed as relatively small gas bubbles rising to the surface of the liquid in the second expansion vessel.

As mentioned earlier, the step S2 results in the formation of a stripping gas cushion above the first vessel level of the liquid volume. Thus, the step S1 may comprise injecting, such as e.g. sprinkling, the supply liquid into the stripping gas cushion. Correspondingly to the first expansion vessel, the step S3 is performed to form a liquid volume at a second vessel level inside of the second expansion vessel, wherein the reduced gas containing liquid is introduced through an inlet located in a lower half of the second expansion vessel. Step S3 may be performed through an inlet pipe extending from a periphery of the second expansion vessel into the liquid volume and optionally by directing the liquid away from a liquid outlet of the second expansion vessel.

As seen in Fig. 1, the process may optionally comprise step S2B venting gas from the first expansion vessel into a first gas venting pipe, and the step S4B venting gas from the second expansion vessel into a second gas venting pipe. Thus, the second gas venting pipe is in fluid communication with the first gas venting pipe so that the first expansion vessel is gaseous connected to the second expansion vessel.

The process may further comprise the step S5 discharging the gas treated liquid from the second expansion vessel. The gas treated liquid may in a subsequent step S6 be supplied to an object and cool the object with the gas treated liquid. Other purposes of the gas treated liquid than cooling is also possible.

As mentioned earlier, the liquid may e.g. be water, or a water-based solution. The stripping gas may e.g. be an inert gas such as nitrogen. At least a portion of the dissolved gas in the liquid may be oxygen.

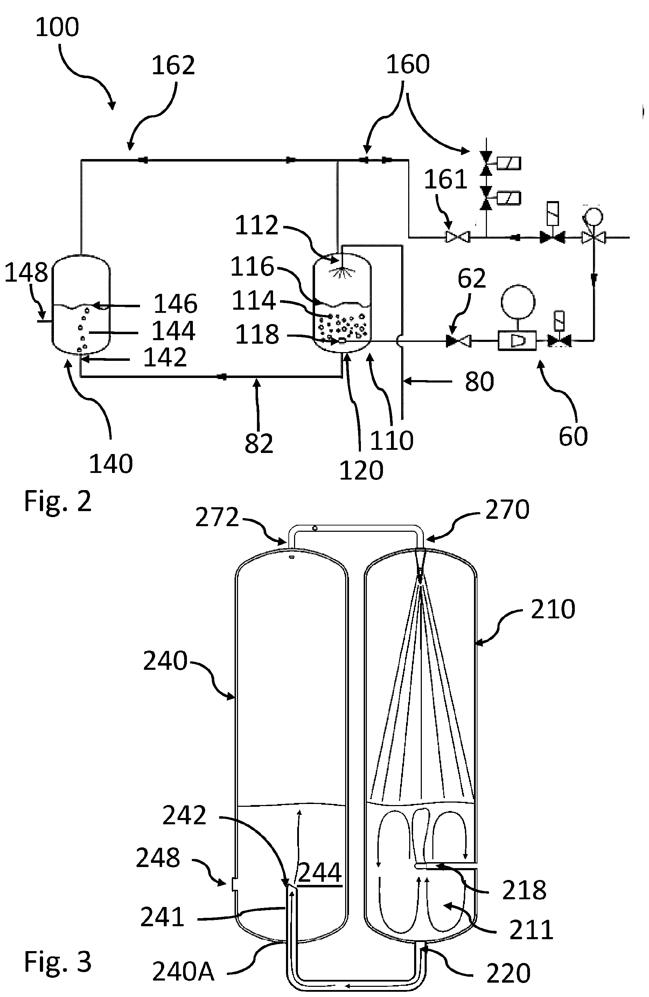

In Fig. 2 a liquid treatment arrangement 100 according to at least one embodiment is disclosed. The liquid treatment arrangement 100 comprises a first expansion vessel 110 and a second expansion vessel 140. The first expansion vessel 110 comprises a liquid inlet 112 configured to inject a supply liquid into the first expansion vessel 110. The supply liquid is transferred to the liquid inlet 112 by a first supply line 80. The supply liquid, e.g. water or a water-based solution comprises dissolved gas (e.g. oxygen) and may e.g. be part of a cooling system. In operation, the injected supply liquid forms a liquid volume 114 at a first vessel level 116 inside the first expansion vessel 110. The first expansion vessel 110 further comprises a gas inlet 118 configured to inject a stripping gas into the liquid volume 114 below the first vessel level 116. Hereby, at least a portion of the dissolved gas contained in the liquid volume 114 can be removed, illustrated as gas bubbles rising to the surface at the first vessel level 116, to produce a reduced gas containing liquid. The gas inlet 118 is in Fig. 2 connected to a gas supply system 60 comprising adequate valves, regulating equipment and flow meters (of which only one valve, a solenoid valve, 62 is indicated in Fig. 2). The gas supply system 60 comprises, or is connected to, a stripping gas source (not shown).

The first expansion vessel 110 further comprises a liquid outlet 120 configured to discharge the reduced gas containing liquid out from the first expansion vessel 110, such discharged reduced gas containing liquid will typically include at least a portion of the stripping gas, and potentially a portion of dissolved gases in the liquid.

As seen in Fig. 2, the second expansion vessel 140 comprises a liquid inlet 142, configured to receive the reduced gas containing liquid from the first expansion vessel 110, via a second supply line 82. The liquid inlet 142 is configured to inject the reduced gas containing liquid into the second expansion vessel 140 to, in operation, form a liquid volume 144 at a second vessel level 146 inside of the second expansion vessel 140. The liquid inlet 142 of the second expansion vessel 140 is arranged in a lower half of the second expansion vessel 140, and more particularly in the bottom of the second expansion vessel 140.

The second expansion vessel 140 is configured to accommodate the reduced gas containing liquid in the second expansion vessel 140 to enable at least a portion of the stripping gas to be removed from the liquid to produce a gas treated liquid. Moreover, dissolved gases not removed in the first expansion vessel 110 may be contained in the reduced gas containing liquid injected into the second expansion vessel 140. Such dissolved gases may be further removed in the second expansion vessel 140 by the stripping gas. The second expansion vessel 140 in Fig. 2 also comprises a liquid outlet 148, configured to discharge the gas treated liquid from the second expansion vessel 140. The gas treated liquid may be used for e.g. cooling purposes.

The liquid treatment arrangement 100 in Fig. 2 further comprises a first ventilation arrangement 160 configured to ventilate gas from the first expansion vessel 110, and a second ventilation arrangement 162 configured to ventilate gas from the second expansion vessel 140. The second ventilation arrangement 162 is in fluid communication with the first ventilation arrangement 160 such that, in operation, the first expansion vessel 110 is gaseous connected to the second expansion vessel 140. The first ventilation arrangement further 160 comprises adequate valves and regulating equipment (of which only one valve 161 is indicated) to control the removal of the gases from the first and second expansion vessels 110, 140.

Fig. 3 shows enlarged views of a first expansion vessel 210 and second expansion vessel 240 similar, and exchangeable with, the first and second expansion vessels 110, 140 shown in Fig. 2 (in Fig. 3 corresponding components of the first and second expansion vessels 210, 240 are indicated with the same reference number as in Fig. 2, but with the additional value of 100). As seen in Fig. 3, the second expansion vessel 240 comprises an inlet pipe 241 comprising the liquid inlet 242. The inlet pipe 241 extends from a periphery 240A of the second expansion vessel 240 into the liquid volume 244, and is arranged in such a way that the inlet 242 is facing away from the liquid outlet 248 of the second expansion vessel 240.

Moreover, in Fig. 3, the recirculation zone 211 of liquid in the first expansion vessel 210, below the gas inlet 218, and above the liquid outlet 220, earlier described is visualized.

In Fig. 3, the gaseous connection between the first and second expansion vessels 210, 240 is shown in a simplified manner. However, it should be understood that the first and second ventilation arrangements 160, 162 shown in Fig. 2 is applicable to the first and second expansion vessels 210, 240 of Fig. 3 as well. As disclosed, the first expansion vessel 210 is connected to a first venting pipe 270 (typically being comprised of the first venting arrangement 160), and the second expansion vessel 240 is connected to a second venting pipe 272 (typically being comprised of the second venting arrangement 162). The first and the second gas venting pipes 270, 272 are connected to each other to enable the gaseous connection between the first and second expansion vessels 210, 240.

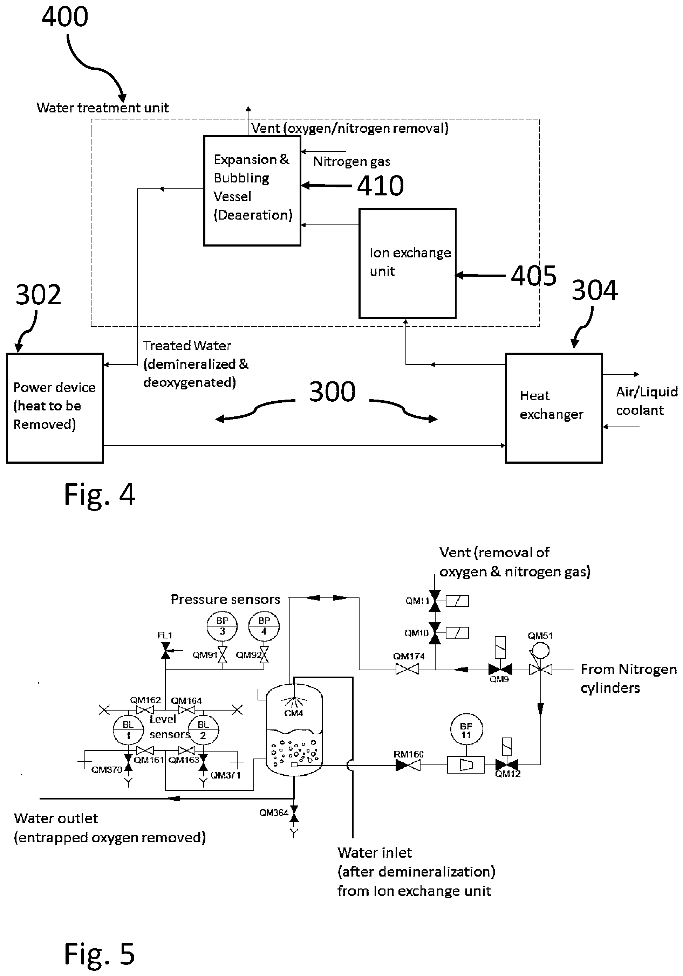

The invention will now be elucidated with the reference to a cooling system, and associated water treatment unit, as disclosed in Figs. 4-7.

In the following the present invention is described with a relation to a recirculating cooling unit, also referred to as a liquid thermal control system.

Such liquid thermal control system mainly comprises a pumping subsystem to pump liquid (e.g. water) through a piping system to a heated device 302 (e.g. a power device such as a high voltage semiconductor device used in power converters, power equipment such as a transformer, a datacenter for cooling computing devices etc.) that needs to be cooled and a heat exchanger 304 for removal of heat from the liquid used for cooling. The heat exchanger may use air, liquid or two-phase evaporative technology for removing heat from the circulating liquid carrying heat from the heated device 302.

In a water-cooled system 300, the cooling system 300 also may have a water treatment unit 400 consisting of an ion exchange 405 for demineralizing and a fine filter unit to eliminate salts/minerals that contribute to electrical conductivity of the water and to avoid scale build-up in pipes and on appliances used in the cooling system. The system also comprises an expansion vessel 410 with or without nitrogen bubbling that is used for accommodating change in volume of the water caused due to expansion of water with temperature. The nitrogen bubbling of the water is for the removal of oxygen from the water that is used in the cooling system 300 by spraying the water in the vessel and by use of nitrogen gas which being highly soluble in water will remove dissolved oxygen from the water by means of a venting valve. The water-cooling system 300 will have the supporting instrumentation (measurement, control and monitoring) to operate and manage the water-cooling system 300. Fig. 4 illustrates a simple block diagram of such water-cooling system.

Introduction of nitrogen bubbles helps in release of dissolved oxygen in the fluid that would have come into the cooling system through chemical interaction of water at elevated temperatures during circulation with materials used in the various appliances and pipes used in the cooling system. For example, certain kind of devices can have elements (materials) in contact with the dissolved oxygen in deionized water and enhance growth of the native oxide, especially at elevated temperatures. The dissolved oxygen will also cause oxidation/etching problem in one or more components, especially for deionized water.

A nitrogen gas-based technique for removal of dissolved oxygen may be preferred over other techniques such as use of vacuum to remove dissolved gas as the gas removal process is done at ambient temperature and there is no need to use additional equipment for generating and maintaining vacuum in the vessel or oxygen absorbing chemicals. However, in the nitrogen gas-based technique for removal of dissolved gas, there may still be some small amount of free gas (nitrogen/oxygen bubbles) entrapped in the water and which will flow into the main circuit. These entrapped gas bubbles in the water reduces cooling efficiency as the entrapped gas does not remove heat from the heated device in comparison with flowing water without any entrapped gas bubbles. Also, the gas bubbles can get entrapped in appliances/devices used in the cooling system, for example standby pumps, the cooled object (heated device) or any high points with low velocity thus eliminating the cooling capacity.

Therefore, to improve cooling efficiency and further improvement of life of devices/equipment used in the cooling system, there is a need to enhance removal of entrapped gas bubbles from the liquid used for cooling in the cooling system.

With the following description embodiments of the invention is described and the improvement over existing system is explained. The embodiments of the invention described herein can be provided as an extension to the older systems and as an additional subsystem for cooling systems made by any third-party company to help improve efficiency of cooling system.

Fig, 5 provides a typical expansion and bubbling vessel that is used for storage and removal of gas bubbles from a water based cooling system.

As can be observed from Fig. 5, the subsystem provided is a typical expansion vessel with nitrogen bubbling unit CM4 along with other devices/valves used to regulate pressure, level, flow of water and nitrogen gas in and out of the expansion vessel unit (expansion and bubbling unit). As described earlier, to keep the oxygen content very low in the water-cooling circuits, the cooling system has an oxygen removal system that functions with use of nitrogen gas bubbling (regulated by the valve QM12) in the expansion and bubbling vessel CM4. This subsystem is typically a part of the water treatment circuit. The fluid dynamics activities especially relating to movement and removal of bubbles in the expansion and bubbling vessel may be studied using computational fluid dynamics (CFD) simulations to study and optimize working of expansion and bubbling unit.

The outlet water from the ion exchange unit (also part of water treatment circuit) is led through the expansion vessel and exposed to nitrogen, before the water is returned to the main cooling circuit having the heated device, heat exchanger along with pumping system and associated instrumentation for monitoring and control of the cooling process/system.

With reference to Fig. 5, for the purpose of removal of dissolved gas, water is exposed (deaeration process) in two ways. One is by sprinkling water via a nozzle at the top of the expansion vessel, into the nitrogen cushion used for the vessel pressurizing. The other is to inject nitrogen gas through a spreader at the bottom, which make the gas to bubble through the water volume in the vessel.

For oxygen removal purpose, the water entering the tank in the top, is sprayed via a nozzle to distribute water in the nitrogen gas cushion, thereby increasing the contact surface between gas and liquid by the means of water droplets. As already mentioned, by sprinkling water into the nitrogen cushion the contact surface water-nitrogen is increased. The dissolved oxygen will then partly be transferred into gaseous phase and removed from the water. To renew the nitrogen gas cushion, when saturated with the amount of oxygen where the transfer of oxygen stagnates, nitrogen is injected through a spreader at the bottom of the expansion vessel i.e. in the bottom of the expansion vessel a gas nozzle for nitrogen gas bubbling is installed. That makes the pressure to rise above the limit for regulating valves QM10, QM11 used in the gas venting circuitry and thus, the regulating valve will open to release the nitrogen/oxygen mixture to the surrounding atmosphere. The feed of gas is cycled periodically by opening and closing a solenoid valve QM12. Every time the valve opens to blow in new gas, the oxygen saturated gas in top of the vessel is blown out via the over-pressure valve (solenoid valves, QM10, QM11). Thereby a refreshment of the nitrogen gas cushion is achieved. The cycling time for the solenoid valve is selected depending on experience and the gas feed will be decided at the site. For pure pressure regulating purposes when gas bubbling isn't needed but the system has a low pressure the nitrogen will be introduced at the top of the tank by the means of a solenoid valve QM9.

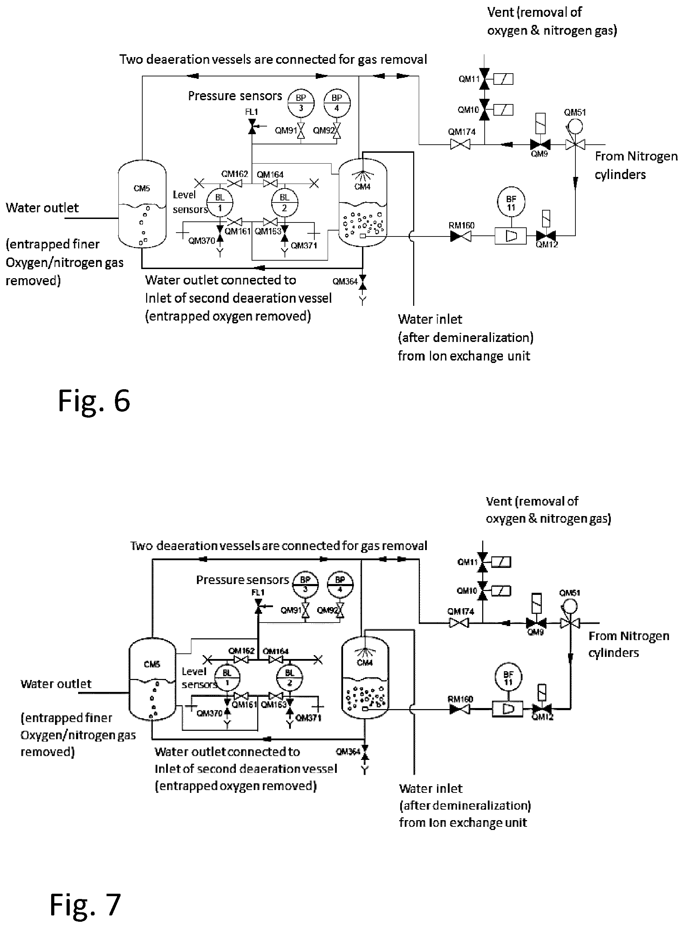

It is to be noted that in this invention, the functioning of valves and regulators, and in general the instrumentation used for monitoring and control are the same (refer process diagram of the invention provided in Fig. 6) as that used in the prior-art cooling system illustrated with process diagram provided in Fig. 5.

Two parameters are used to control the oxygen content; the bubbling time and the gas flow. The bubbling time is controlled with a computer processor which based on software instructions (part of instrumentation for operating the cooling system) will provide control signals to open a solenoid valve QM12. The nitrogen gas flow (is adjusted by means of a pressure regulating valve QM51 and on the gas flow meter BF11. These parameters are normally set during a commissioning/maintenance of the cooling system. The gas feed is normally set manually on a flow meter BF11 with built in regulating valve placed on the gas pipe to the bottom nozzle. These setting are trimmed (finetuned) to keep a nominal level of dissolved oxygen (acceptable level is installation depended), which must be measured with special tools at the site or with inline sensors.

Solenoid valves QM10, QM11 releases the pressure automatically and ensures that it will not increase above allowed level.

The following components belonging to the nitrogen gas bubbling system are used as a part of measurement and control circuitry to manage the process:
A gas spreader (nozzle) in the lower section of the vessel,
A water inlet and spraying nozzle at the top,
A gas flow meter with regulating valve,
A solenoid value to vent gas.

The efficiency of the deaeration process improves with use of much larger vessel, which may not be practical due to cost and space restrictions. The invention provides for much improved efficiency by use of additional vessel(s) that can be of similar size or of a lower size compared with the primary vessel CM4 and can be added to the existing water treatment subsystem.

One or more vessels are attached after the combined bubble and expansion vessel where gas that travels with the liquid flow is separated by entering a relatively infinitive vessel thus reducing the velocity to a near zero value. An outlet from that vessel far from the inlet minimizes the amount of gas bubbles that is carried onward in the liquid flow. The flow diagram of the invention with one additional vessel CM5 to the primary expansion and bubbling vessel CM4 is provided in Fig. 6. This embodiment of the invention is an improvement made in the method of protecting the closed loop water cooling systems from gas bubbles.

As one can see from the Fig. 6, the top of the second tank CM5 is connected to the top of the first tank CM4. That means that the level of liquid in both vessels will be approximately the same and the second vessel also acts as an expansion vessel. The liquid connection from the second vessel is connected to the deaeration vessel instead of the main feed line, thus minimizing any remaining loose gas bubbles.

The working of the invention is explained in the following paragraphs with reference to Fig. 6. The first expansion vessel CM4 is filled with the liquid (typically deionized water/glycol mixture) from the ion exchange chambers, where in the expansion vessel CM4, the liquid is sprayed and also the vessel is filled with nitrogen gas (bubbles) controlled through flow regulators connected to nitrogen gas cylinders. As already mentioned, the control circuitry and instrumentation for regulating flow of gas and water are similar to the existing system working that was illustrated with Fig. 5, and the explanation with regard to control of gas (inlet and venting) is not repeated again for Fig. 6.

In the second vessel, the velocity of the water moving through the connecting pipe line from the expansion vessel used is suddenly brought nearly to zero as the second vessel is a large container and water will be almost at rest for a limited time period, thereby enabling the finer bubbles (entrapped oxygen/nitrogen molecules) to be released and vented out. Though, the particular embodiment of the invention explained with Fig. 6 illustrates use of two vessels, a person skilled in the art would recognize that the invention supports use of one or more (multiple) additional vessels that can be connected to the primary vessel used for expansion and bubbling, to effectively remove dissolved gaseous from the circulating water (liquid). The advantage of the invention is that it does not require use of a very large expansion and bubbling vessel for the purpose of removal of fine gas bubbles from the circulating water, thereby provide space-effective and cost-effective solution. As the nitrogen bubbles rise (gravity) through the liquid it drives the surrounding liquid upwards, this along with the addition of water sprayed above and the outlet at the bottom (gravity feed) of the vessel drives a recirculation of liquid to fill the gap bellow the nitrogen inlet that leads to some fine bubbles leaves the bubbling vessel along with the liquid.

As mentioned earlier, efficiency and availability of the cooling system can be improved by removing the very fine liquid bubbles that may be trapped in the liquid (water) and released with the liquid from the bottom of the expansion vessel into the main cooling circuitry. To solve this problem, the invention provides a second vessel CM5 that receives the liquid drained out from the bottom of the first expansion vessel CM4 and is filled into the second vessel from the bottom.

The two vessels, the first expansion and bubbling vessel CM4, and the second vessel CM5 are used together for removing finer bubbles (dissolved gas in the liquid). As can be seen from the Fig. 6, the two vessels are connected from the top to allow sharing of same gas pressure in both the vessels and to have collective venting of gas from both the vessels. Thereby, the two vessels are both partially filled with liquid (approximately same level) and are connected also to each other through a pipe from the top so that the gas pressure in both the vessels are maintained at the same level, and the entrapped nitrogen/oxygen gas molecules in both the vessels including fine nitrogen/oxygen bubbles from the second vessel can be released through the vent valves QM10, QM11. The gas pressure for circulation of nitrogen is set higher than the static pressure in the expansion vessels, the pressure is higher than atmospheric pressure so that the nitrogen and released oxygen can be easily vented out to the atmosphere through the vent valves QM10, QM11. In Fig. 6, the expansion and bubbling vessels CM4, CM5 provide a symbolic representation of bubbling activities in the vessels CM4, CM5 with depiction of bubbles in the vessels. A person skilled in the art will recognize that though most of the bubbles from the first vessel CM4 move upwards and gets released through the vent system, some fine bubbles do escape from the bottom of the first vessel CM4 irrespective of the size of the first vessel, and in the particular embodiment of the invention get released in the second CM5 vessel and subsequent vessels if deployed for removal of finer bubbles. The efficacy of the entrapped gas bubbles may be studied using CFD simulations.

Further, a person skilled in the art would recognize that the instrumentation for control of level and pressure in the vessels CM4, CM5 can also be managed through installing level sensors and pressure sensors in the second/subsequent vessels as illustrated in Fig. 7. Also, the control can be managed as a combination i.e. installation of specific sensors in one vessel and installation of some other sensors (or redundant sensors) in the other vessel.

Even though the invention has been described with reference to specific exemplifying embodiments thereof, many different alterations, modifications and the like will become apparent for those skilled in the art. For example, the invention is applicable to other liquids than water, and water-based solutions. The stripping gas may be an inert gas, such as nitrogen, but may as well be a reactive gas. The removed gases may origin as dissolved and/or undissolved gases, such as e.g. oxygen dissolved in the liquid and/or stripping gas dissolved and/or undissolved in the liquid. Also, it should be noted that parts and components of the embodiments described herein, such as e.g. those needed for control and regulation of the systems, are not described in detail but known to the skilled person (e.g. devices/valves/sensors used to regulate pressure, level, flow of liquid/gas etc.). The first and the second vessel may be expansion vessels, as described herein, but may as well be other types of vessels, or at least one of the first and second vessel may not be an expansion vessel, yet being able to perform the functionality of the present invention. Moreover, the gas treated liquid may be used for various purposes, one example being cooling in a heat exchange system. Furthermore, it should be understood that the first and second vessel levels are referring to liquid levels of the first and second liquid volume, respectively. In the claims, the word "comprising" does not exclude other elements or steps, and the indefinite article "a" or "an" does not exclude a plurality.

## Claims

1. A process for removing gases from a liquid, the process comprising the steps of:
- (S1) introducing a supply liquid to a first vessel (110) to form a liquid volume (114) at a first vessel level (116) inside of the first vessel (110),
- (S2) injecting, through a gas inlet (118), a stripping gas into the liquid volume (114) below the first vessel level (116) to remove at least a portion of the dissolved gas contained in the liquid volume (114) to produce a reduced gas containing liquid including at least a portion of the stripping gas, wherein a recirculation zone with liquid comprising at least a portion of the stripping gas will be formed in the first vessel, typically below the injection of the stripping gas, and the injection of the stripping gas into the liquid volume (114) resulting in the formation of a stripping gas cushion above the first vessel level (116) of the liquid volume (114), and discharging the reduced gas containing liquid out from a liquid outlet (120) in the first vessel (110) to a liquid supply line (82),
- (S3) introducing the reduced gas containing liquid from the liquid supply line (82) into a second vessel (140) through a liquid inlet (142),
- (S4) accommodating the liquid from the reduced gas containing liquid in the second vessel (140) to enable at least a portion of the stripping gas to be removed from the liquid to produce a gas treated liquid,
wherein the step (S1) of introducing a supply liquid to the first vessel (110) comprises injecting, by sprinkling or spraying, the supply liquid into the stripping gas cushion, and wherein the step (S3) of introducing the reduced gas containing liquid into the second vessel (140) is performed to form a liquid volume (144) at a second vessel level (146) inside of the second vessel (140), wherein the reduced gas containing liquid is introduced through an inlet (142) located in a lower half of the second vessel (140) and accommodated in the second vessel (140) to enable at least a portion of the stripping gas to be removed from the liquid to produce a gas treated liquid, wherein the gas treated liquid is discharged from a liquid outlet (148) in the second vessel (140), and wherein both the inlet (142) in the second vessel (140) and the liquid outlet (148) in the second vessel are arranged in the lower half of the second vessel (140), wherein the process further comprises providing a first ventilation arrangement (160) comprising at least one valve (161), the first ventilation arrangement (160) configured to ventilate gas from the first vessel (110), and a second ventilation arrangement (162) configured to ventilate gas from the second vessel (140), wherein the second ventilation arrangement (162) is in fluid communication with the first ventilation arrangement (160) such that, in operation, the first vessel (110) is gaseous connected to the second vessel (140), and the liquid driving force from the first vessel (110) to the second vessel (140) can thereby be controlled, and wherein at least two parameters are used to control the amount of gases removed from the liquid, said parameters comprising bubbling time and gas flow rate.

2. The process according to claim 1, wherein the step (S3) of introducing the reduced gas containing liquid into the second vessel (140) is performed through an inlet pipe (241) extending from a periphery of the second vessel (140) into the liquid volume.

3. The process according to claim 2, wherein the step of introducing the reduced gas containing liquid into the second vessel (140) is performed by directing the liquid away from a liquid outlet of the second vessel (140).

4. The process according to any one of claims 1-3 further comprising the step of venting gas from the first vessel (110) into a first gas venting pipe, and the step of venting gas from the second vessel (140) into a second gas venting pipe, the second gas venting pipe being in fluid communication with the first gas venting pipe so that the first vessel (110) is gaseous connected to the second vessel (140).

5. The process according to any one of the preceding claims, further comprising the steps of forming, by the injection of the stripping gas into the liquid volume in the first vessel (110), relatively large gas bubbles of at least the dissolved gas, and removing relatively smaller gas bubbles of at least the stripping gas in the second vessel (140).

6. The process according to any one of the preceding claims, further comprising the steps of supplying the gas treated liquid to an object and cooling the object with the gas treated liquid.

7. The process according to any one of the preceding claims, wherein the stripping gas is an inert gas such as e.g. nitrogen, and at least a portion of the dissolved gas is oxygen.

8. A liquid treatment arrangement (100) comprising:
- a first vessel (110) comprising a liquid inlet (112), arranged in an upper half of the first vessel (110), the liquid inlet (112) configured to inject a supply liquid comprising dissolved gas into the first vessel (110) to form, in operation, a liquid volume at a first vessel level (116) inside the first vessel (110), and comprising a gas inlet (118) configured to inject a stripping gas into the liquid volume below the first vessel level (116) to remove at least a portion of the dissolved gas contained in the liquid volume to produce a reduced gas containing liquid including at least a portion of the stripping gas, and wherein the first vessel (110) is configured and arranged so that the injection of the stripping gas into the liquid volume (114) results in the formation of a stripping gas cushion above the first vessel level (116) of the liquid in the vessel, the liquid inlet (112) being arranged to inject, by sprinkling or spraying, the supply of liquid into the stripping gas cushion, the first vessel (110) further comprising a liquid outlet (120) arranged at the lower half of the first vessel and below the gas inlet (118), wherein the liquid outlet (120) is configured to discharge the reduced gas containing liquid out from the first vessel (110) to a liquid supply line (82),
- a second vessel (140) comprising a liquid inlet (142) configured to receive the reduced gas containing liquid from the liquid supply line (82), and wherein the liquid inlet (142) is configured to inject the reduced gas containing liquid into the second vessel (140) to, in operation, form a liquid volume at a second vessel level (146) inside of the second vessel (140), wherein the liquid inlet (142) is arranged in a lower half of the second vessel (140), and wherein the second vessel (140) is configured to accommodate the reduced gas containing liquid in the second vessel (140) to enable at least a portion of the stripping gas to be removed from the liquid to produce a gas treated liquid, and wherein the second vessel (140) comprises a liquid outlet (148) for discharging the gas treated liquid from the second vessel (140),
wherein the liquid treating arrangement (100) further comprises a first ventilation arrangement (160) comprising at least one valve (161), the first ventilation arrangement (160) configured to ventilate gas from the first vessel (110), and a second ventilation arrangement (162) configured to ventilate gas from the second vessel (140), wherein the second ventilation arrangement (162) is in fluid communication with the first ventilation arrangement (160) such that, in operation, the first vessel (110) is gaseous connected to the second vessel (140), and the liquid driving force from the first vessel (110) to the second vessel (140) can thereby be controlled.

9. The liquid treatment arrangement (100) according to claim 8, wherein the second vessel (140) further comprises an inlet pipe (241) comprising the liquid inlet (142), wherein the inlet pipe (241) extends from a periphery of the second vessel (140) into the liquid volume.

## Patentansprüche

1. Verfahren zum Entfernen von Gasen aus einer Flüssigkeit, wobei das Verfahren die Schritte umfasst:
- (S1) Einführen einer Zufuhrflüssigkeit in ein erstes Gefäß (110), um ein Flüssigkeitsvolumen (114) auf einen ersten Füllstand (116) in dem ersten Gefäß (110) zu bilden,
- (S2) durch einen Gaseinlass (118) Einspritzen eines Strippgases in das Flüssigkeitsvolumen (114) unterhalb des ersten Füllstands (116), um wenigstens einen Teil des gelösten Gases, das in dem Flüssigkeitsvolumen (114) enthalten ist, zu entfernen, um eine an enthaltenem Gas verminderte Flüssigkeit zu erzeugen, die wenigstens einen Teil des Strippgases enthält, wobei eine Rezirkulationszone mit Flüssigkeit, die wenigstens einen Teil des Strippgases umfasst, in dem ersten Gefäß gebildet wird, typischerweise unterhalb des Einspritzens des Strippgases, und das Einspritzen des Strippgases in das Flüssigkeitsvolumen (114) zu der Entstehung eines Strippgaskissens über dem ersten Füllstand (116) des Flüssigkeitsvolumens (114) führt, und Ausstoßen der an enthaltenem Gas verminderten Flüssigkeit aus einem Flüssigkeitsauslass (120) in dem ersten Gefäß (110) zu einer Flüssigkeitszufuhrleitung (82),
- (S3) Einführen der an enthaltenem Gas verminderten Flüssigkeit aus der Flüssigkeitszufuhrleitung (82) in ein zweites Gefäß (140) durch einen Flüssigkeitseinlass (142),
- (S4) Aufnehmen der Flüssigkeit aus der an enthaltenem Gas verminderten Flüssigkeit in das zweite Gefäß (140), um zu ermöglichen, dass wenigstens ein Teil des Strippgases aus der Flüssigkeit entfernt wird, um eine gasbehandelte Flüssigkeit zu erzeugen,
wobei der Schritt (S1) des Einführens einer Zufuhrflüssigkeit in das erste Gefäß (110) Zuführen durch Beregnen oder Sprühen der Zufuhrflüssigkeit in das Strippgaspolster umfasst und wobei der Schritt (S3) des Einführens der an enthaltenem Gas verminderten Flüssigkeit in das zweite Gefäß (140) durchgeführt wird, um ein Flüssigkeitsvolumen (144) mit einem zweiten Füllstand (146) in dem zweiten Gefäß (140) zu bilden, wobei die an enthaltenem Gas verminderte Flüssigkeit durch einen Einlass (142) eingeführt wird, der in einer unteren Hälfte des zweiten Gefäßs (140) angeordnet ist und in dem zweiten Gefäß (140) untergebracht ist, um zu ermöglichen, dass wenigstens ein Teil des Strippgases aus der Flüssigkeit entfernt wird, um eine gasbehandelte Flüssigkeit zu erzeugen, wobei die gasbehandelte Flüssigkeit aus einem Flüssigkeitsauslass (148) in dem zweiten Gefäß (140) ausgestoßen wird, und wobei sowohl der Einlass (142) in dem zweiten Gefäß (140) als auch der Flüssigkeitsauslass (148) in dem zweiten Gefäß in der unteren Hälfte des zweiten Gefäßes (140) angeordnet sind, wobei das Verfahren ferner Bereitstellen einer ersten Lüftungsanordnung (160) umfasst, die wenigstens ein Ventil (161) umfasst, wobei die erste Lüftungsanordnung (160) dafür gestaltet ist, Gas aus dem ersten Gefäß (110) abzulassen, und eine zweite Lüftungsanordnung (162), die dafür gestaltet ist, Gas aus dem zweiten Gefäß (140) abzulassen, wobei die zweite Lüftungsanordnung (162) in Fluidverbindung mit der ersten Lüftungsanordnung (160) steht, so dass im Betrieb das erste Gefäß (110) mit dem zweiten Gefäß (140) gasverbunden ist und dadurch die flüssigkeitstreibende Kraft von dem ersten Gefäß (110) zu dem zweiten Gefäß (140) gesteuert werden kann, und wobei wenigstens zwei Parameter verwendet werden, um die Menge an Gasen zu steuern, die aus der Flüssigkeit entfernt werden, wobei die Parameter Sprudelzeit und Gasdurchflussrate umfassen.

2. Verfahren nach Anspruch 1, wobei der Schritt (S3) des Einführens der an enthaltenem Gas verminderten Flüssigkeit in das zweite Gefäß (140) durch ein Einlassrohr (241) durchgeführt wird, das von einem Rand des zweiten Gefäßs (140) in das Flüssigkeitsvolumen verläuft.

3. Verfahren nach Anspruch 2, wobei der Schritt des Einführens der an enthaltenem Gas verminderten Flüssigkeit in das zweite Gefäß (140) durch Leiten der Flüssigkeit weg von einem Flüssigkeitsauslass des zweiten Gefäßes (140) durchgeführt wird.

4. Verfahren nach einem der Ansprüche 1-3, ferner umfassend den Schritt des Ablassens von Gas aus dem ersten Gefäß (110) in ein erstes Gasentlüftungsrohr und den Schritt des Ablassens von Gas aus dem zweiten Gefäß (140) in ein zweites Gasentlüftungsrohr, wobei das zweite Gasentlüftungsrohr in Fluidverbindung mit dem ersten Gasentlüftungsrohr steht, so dass das erste Gefäß (110) mit dem zweiten Gefäß (140) gasverbunden ist.

5. Verfahren nach einem der vorstehenden Ansprüche, ferner umfassend die Schritte des Bildens, durch das Einspritzen des Strippgases in das Flüssigkeitsvolumen in dem ersten Gefäß (110), vergleichsweise großer Gasblasen wenigstens des gelösten Gases und des Entfernens vergleichsweise kleinerer Gasblasen wenigstens des Strippgases in dem zweiten Gefäß (140).

6. Verfahren nach einem der vorstehenden Ansprüche, ferner umfassend die Schritte des Zuführens der gasbehandelten Flüssigkeit zu einem Gegenstand und des Kühlens des Gegenstands mit der gasbehandelten Flüssigkeit.

7. Verfahren nach einem der vorstehenden Ansprüche, wobei das Strippgas ein Inertgas ist, wie z.B. Stickstoff, und wenigstens ein Teil des gelösten Gases Sauerstoff ist.

8. Flüssigkeitsbehandlungsanordnung (100) umfassend:
- ein erstes Gefäß (110), das einen Flüssigkeitseinlass (112) umfasst, der in einer oberen Hälfte des ersten Gefäßes (110) angeordnet ist, wobei der Flüssigkeitseinlass (112) dafür gestaltet ist, eine Zufuhrflüssigkeit, die gelöstes Gas umfasst, in das erste Gefäß (110) einzuspritzen, um im Betrieb ein Flüssigkeitsvolumen auf einen ersten Füllstand (116) in dem ersten Gefäß (110) zu bilden, und umfassend einen Gaseinlass (118), der dafür gestaltet ist, ein Strippgas in das Flüssigkeitsvolumen unterhalb des ersten Füllstands (116) einzuspritzen, um wenigstens einen Teil des gelösten Gases, das in dem Flüssigkeitsvolumen enthalten ist, zu entfernen, um eine an enthaltenem Gas verminderte Flüssigkeit zu erzeugen, die wenigstens einen Teil des Strippgases enthält, und wobei der erste Gefäß (110) so gestaltet und angeordnet ist, dass das Einspritzen des Strippgases in das Flüssigkeitsvolumen (114) zu der Entstehung eines Strippgaskissens über dem ersten Gefäßniveau (116) der Flüssigkeit in dem Gefäß führt, wobei der Flüssigkeitseinlass (112) so angeordnet ist, die Zufuhr von Flüssigkeit durch Beregnen oder Sprühen in das Strippgaskissen einzuführen, wobei das erste Gefäß (110) ferner einen Flüssigkeitsauslass (120) umfasst, der an der unteren Hälfte des ersten Gefäßes und unterhalb des Gaseinlasses (118) angeordnet ist, wobei der Flüssigkeitsauslass (120) dafür gestaltet ist, die an enthaltenem Gas verminderte Flüssigkeit aus dem ersten Gefäß (110) zu einer Flüssigkeitszufuhrleitung (82) auszustoßen,
- ein zweites Gefäß (140), das einen Flüssigkeitseinlass (142) umfasst, der dafür gestaltet ist, die an enthaltenem Gas verminderte Flüssigkeit von der Flüssigkeitszufuhrleitung (82) aufzunehmen, und wobei der Flüssigkeitseinlass (142) dafür gestaltet ist, die an enthaltenem Gas verminderte Flüssigkeit in das zweite Gefäß (140) einzuspritzen, um im Betrieb ein Flüssigkeitsvolumen mit einem zweiten Füllstand (146) in dem zweiten Gefäß (140) zu bilden, wobei der Flüssigkeitseinlass (142) in einer unteren Hälfte des zweiten Gefäßes (140) angeordnet ist, und wobei das zweite Gefäß (140) dafür gestaltet ist, die an enthaltenem Gas verminderte Flüssigkeit in das zweite Gefäß (140) aufzunehmen, um zu ermöglichen, dass wenigstens ein Teil des Strippgases aus der Flüssigkeit entfernt wird, um eine gasbehandelte Flüssigkeit zu erzeugen, und wobei das zweite Gefäß (140) einen Flüssigkeitsauslass (148) zum Ausstoßen der gasbehandelten Flüssigkeit aus dem zweiten Gefäß (140) umfasst,
wobei die Flüssigkeitsbehandlungsanordnung (100) ferner eine erste Lüftungsanordnung (160) umfasst, die wenigstens ein Ventil (161) umfasst, wobei die erste Lüftungsanordnung (160) dafür gestaltet ist, Gas aus dem ersten Gefäß (110) abzulassen, und eine zweite Lüftungsanordnung (162), die dafür gestaltet ist, Gas aus dem zweiten Gefäß (140) abzulassen, wobei die zweite Lüftungsanordnung (162) in Fluidverbindung mit der ersten Lüftungsanordnung (160) steht, so dass im Betrieb das erste Gefäß (140) mit dem zweiten Gefäß (110) gasverbunden ist, wodurch die flüssigkeitstreibende Kraft von dem ersten Gefäß (110) zu dem zweiten Gefäß (140) gesteuert werden kann.

9. Flüssigkeitsbehandlungsanordnung (100) nach Anspruch 8, wobei das zweite Gefäß (140) ferner ein Einlassrohr (241) umfasst, das den Flüssigkeitseinlass (142) umfasst, wobei das Einlassrohr (241) von einem Umfang des zweiten Gefäßes (140) in das Flüssigkeitsvolumen verläuft.

## Revendications

1. Procédé d'élimination des gaz d'un liquide, le procédé comprenant les étapes de :
- (S1) l'introduction d'un liquide d'alimentation dans un premier récipient (110) pour former un volume de liquide (114) à un premier niveau de récipient (116) à l'intérieur du premier récipient (110),
- (S2) l'injection, par une entrée de gaz (118), d'un gaz de stripage dans le volume de liquide (114) au-dessous du premier niveau de récipient (116) pour éliminer au moins une partie du gaz dissous contenu dans le volume de liquide (114) afin de produire un liquide contenant du gaz réduit comprenant au moins une partie du gaz de stripage, dans lequel une zone de recirculation avec du liquide comprenant au moins une partie du gaz de stripage sera formée dans le premier récipient, typiquement en dessous de l'injection du gaz de stripage, et l'injection du gaz de stripage dans le volume de liquide (114) entraînant la formation d'un coussin de gaz de stripage au-dessus du niveau du premier récipient (116) du volume de liquide (114), et évacuant le liquide contenant du gaz réduit à partir d'une sortie de liquide (120) dans le premier récipient (110) vers une conduite d'alimentation en liquide (82),
- (S3) l'introduction du liquide contenant du gaz réduit à partir de la conduite d'alimentation en liquide (82) dans un second récipient (140) par l'intermédiaire d'une entrée de liquide (142),
- (S4) la réception du liquide provenant du liquide contenant du gaz réduit dans le second récipient (140) pour permettre à au moins une partie du gaz de stripage d'être éliminé du liquide afin de produire un liquide traité au gaz,
l'étape (S1) d'introduction d'un liquide d'alimentation dans le premier récipient (110) comprenant l'injection, par aspersion ou pulvérisation, du liquide d'alimentation dans le coussin de gaz de stripage, et l'étape (S3) d'introduction du liquide contenant du gaz réduit dans le second récipient (140) étant effectuée pour former un volume de liquide (144) à un deuxième niveau de récipient (146) à l'intérieur du second récipient (140), le liquide contenant du gaz réduit étant introduit par une entrée (142) située dans une moitié inférieure du second récipient (140) et logée dans le second récipient (140) pour permettre à au moins une partie du gaz de stripage d'être éliminé du liquide pour produire un liquide traité au gaz, le liquide traité au gaz étant évacué à partir d'une sortie de liquide (148) dans le second récipient (140), et à la fois l'entrée (142) dans le second récipient (140) et la sortie de liquide (148) dans le second récipient étant agencées dans la moitié inférieure du second récipient (140), le procédé comprenant en outre la fourniture d'un premier agencement de ventilation (160) comprenant au moins une vanne (161), le premier agencement de ventilation (160) étant configuré pour ventiler le gaz à partir du premier récipient (110), et un deuxième agencement de ventilation (162) configuré pour ventiler le gaz du second récipient (140), le deuxième agencement de ventilation (162) étant en communication fluidique avec le premier agencement de ventilation (160), de sorte que, en fonctionnement, le premier récipient (110) est relié de manière gazeuse au second récipient (140), et la force d'entraînement du liquide du premier récipient (110) au second récipient (140) peut ainsi être commandée, et au moins deux paramètres étant utilisés pour commander la quantité de gaz éliminée du liquide, lesdits paramètres comprenant le temps de bullage et le débit de gaz.

2. Procédé selon la revendication 1, l'étape (S3) d'introduction du liquide contenant du gaz réduit dans le second récipient (140) étant réalisée par un tuyau d'entrée (241) s'étendant à partir d'une périphérie du second récipient (140) dans le volume de liquide.

3. Procédé selon la revendication 2, l'étape d'introduction du liquide contenant du gaz réduit dans le second récipient (140) étant réalisée en dirigeant le liquide à l'écart d'une sortie de liquide du second récipient (140).

4. Procédé selon l'une quelconque des revendications 1 à 3, comprenant en outre l'étape d'évacuation du gaz du premier récipient (110) dans un premier tuyau d'évacuation de gaz, et l'étape d'évacuation du gaz du second récipient (140) dans un second tuyau d'évacuation de gaz, le second tuyau d'évacuation de gaz étant en communication fluidique avec le premier tuyau d'évacuation de gaz de sorte que le premier récipient (110) est relié de manière gazeuse au second récipient (140).

5. Procédé selon l'une quelconque des revendications précédentes, comprenant en outre les étapes de formation, par injection du gaz de stripage dans le volume de liquide du premier récipient (110), de bulles de gaz relativement grandes d'au moins le gaz dissous, et d'élimination des bulles de gaz relativement plus petites d'au moins le gaz de stripage dans le second récipient (140).

6. Procédé selon l'une quelconque des revendications précédentes, comprenant en outre les étapes de fourniture du liquide traité au gaz à un objet et de refroidissement de l'objet avec le liquide traité au gaz.

7. Procédé selon l'une quelconque des revendications précédentes, le gaz de stripage étant un gaz inerte tel que l'azote, et au moins une partie du gaz dissous étant de l'oxygène.

8. Agencement de traitement de liquide (100) comprenant :
- un premier récipient (110) comprenant une entrée de liquide (112), agencée dans une moitié supérieure du premier récipient (110), l'entrée de liquide (112) étant configurée pour injecter un liquide d'alimentation comprenant du gaz dissous dans le premier récipient (110) pour former, en fonctionnement, un volume de liquide à un premier niveau de récipient (116) à l'intérieur du premier récipient (110), et comprenant une entrée de gaz (118) configurée pour injecter un gaz de stripage dans le volume liquide au-dessous du premier niveau de récipient (116) pour éliminer au moins une partie du gaz dissous contenu dans le volume liquide afin de produire un liquide contenant du gaz réduit comprenant au moins une partie du gaz de stripage, et le premier récipient (110) étant configuré et agencé pour que l'injection du gaz de stripage dans le volume de liquide (114) entraîne la formation d'un coussin de gaz de stripage au-dessus du premier niveau de récipient (116) du liquide dans le récipient, l'entrée de liquide (112) étant agencée pour injecter, par aspersion ou pulvérisation, l'alimentation de liquide dans le coussin de gaz de stripage, le premier récipient (110) comprenant en outre une sortie de liquide (120) agencée à la moitié inférieure du premier récipient et au-dessous de l'entrée de gaz (118), la sortie de liquide (120) étant configurée pour évacuer le liquide contenant du gaz réduit hors du premier récipient (110) vers une conduite d'alimentation en liquide (82),
- un second récipient (140) comprenant une entrée de liquide (142) configurée pour recevoir le liquide contenant du gaz réduit à partir de la conduite d'alimentation en liquide (82), et l'entrée de liquide (142) étant configurée pour injecter le liquide contenant du gaz réduit dans le second récipient (140) pour, en fonctionnement, former un volume de liquide à un deuxième niveau de récipient (146) à l'intérieur du second récipient (140), l'entrée de liquide (142) étant agencée dans une moitié inférieure du second récipient (140), et le second récipient (140) étant configuré pour recevoir le liquide contenant du gaz réduit dans le second récipient (140) afin de permettre à au moins une partie du gaz de stripage d'être éliminé du liquide pour produire un liquide traité au gaz, et le second récipient (140) comprenant une sortie de liquide (148) pour évacuer le liquide traité au gaz à partir du second récipient (140),
l'agencement de traitement de liquide (100) comprenant en outre un premier agencement de ventilation (160) comprenant au moins une vanne (161), le premier agencement de ventilation (160) étant configuré pour ventiler le gaz du premier récipient (110), et un second agencement de ventilation (162) configuré pour ventiler le gaz du second récipient (140), le deuxième agencement de ventilation (162) étant en communication fluidique avec le premier agencement de ventilation (160) de sorte que, en fonctionnement, le premier récipient (110) est relié de manière gazeuse au second récipient (140), et la force d'entraînement du liquide du premier récipient (110) au second récipient (140) peut ainsi être commandée.

9. Agencement de traitement de liquide (100) selon la revendication 8, le second récipient (140) comprenant en outre un tuyau d'entrée (241) comprenant l'entrée de liquide (142), le tuyau d'entrée (241) s'étendant à partir d'une périphérie du second récipient (140) dans le volume de liquide.
